# EUROPEAN PATENT APPLICATION

(11) **EP 1 496 587 A1**
(43) Date of publication of application: **12.01.2005**
(21) Application number: 03745996.3
(22) Date of filing: 10.04.2003
(51) Int. Cl.: H02G 3/22, H02G 3/30, F16J 15/14

(54) **SEALING STRUCTURE**

(30) Priority: 11.04.2002 JP 2002109269
(71) Applicant: Nok Corporation, Tokyo 105-8585 (JP)
(72) Inventor: MINOSHIMA, Kenji, NOK CORPORATION, Fujisawa-shi, Kanagawa 251-0042 (JP); SENDA, Kazuhisa, HOKUSHIN CORPORATION, Yokohama-shi, Kanagawa 230-0003 (JP); YOSHIDA, Tamotsu, Unimatec Chem.Europe GmbH&Co. KG, 69469 Weinheim (DE); IKEDA, Akihiko, UNIMATEC CO., LTD, Kitaibaraki-shi, Ibaraki 319-1593 (JP)
(74) Representative: Leson, Thomas Johannes Alois, Dipl.-Ing.
(86) International application number: PCT/JP2003/004566
(87) International publication number: WO 2003/085793

(57) **Abstract**

The present invention relates to a hermetic structure having a flat cable. Liquid rubber is charged into a gap to be sealed, the charged liquid rubber is subjected to a physical action at the normal temperature and under the normal pressure, and the liquid rubber is cured to form a seal. By forming the seal in this manner, the limitation of heat resistance and pressure resistance is moderated, the flexibility of selection of materials for various constituent members is enhanced, and the structure is simplified.

## Description

### Technical Field

The present invention relates to a hermetic structure having a flat cable.

### Background Technique

Flat cables are used for apparatuses such as electrical apparatuses, electronics, actuators, sensors and controllers. In such an apparatus, the flat cable must be disposed over two regions (e.g., a region in the apparatus and a region outside the apparatus) in some cases. Examples of the flat cables are flexible printed circuit substrates (referred to as FPC, hereinafter) and flexible flat cables (referred to as FFC, hereinafter).

In this case, in order to isolate the two regions from each other, a location where the flat cable is disposed must be hermetically closed or sealed. The location is generally hermetically closed in the following manners:
(1) A flat cable is integrally formed on a dedicated seal.
(2) A flat cable is integrally formed on a resin housing or case.
(3) A waterproof connector dedicated to a flat cable is used.

These cases will be explained in this order.

### <case (1)>

For example, Japanese Patent Application Laid-open (JP-A) No. 5-503393 discloses a technique in which a flat cable (in this case, FPC) is integrally formed on a forming seal, thereby forming these elements as one piece. According to this technique, by incorporating this one integral piece into an apparatus body, it is possible to easily and reliably hermetically seal the space between the two regions. Of course, the two regions can be electrically connected to each other through the flat cable.

In this case, however, in order to integrally form the flat cable and the forming seal, the following condition must be satisfied. That is, the endurable temperature of a constituent member of the flat cable must be higher than the forming temperature of the forming seal. For the same reason, the endurable pressure of the constituent member of the flat cable must be higher than the forming pressure of the forming seal.

Therefore, when a seal material and a forming condition are selected, there are the following constraints. That is, the forming temperature and the forming pressure of the forming seal can not be higher than the endurable temperature and the endurable pressure of a constituent member of the flat cable. When a constituent member of the flat cable is selected, a constituent member having the endurable temperature and endurable pressure lower than the forming temperature and the forming pressure of the seal material can not be selected.

Under such constraints, the following problem is generated. For example, there is a case in which it is difficult to select an optimal material. When forming easiness, forming efficiency, quality of a formed product and the like are taken into account, there is a case in which the optimal condition can not be applied. The flexibility of design concerning a shape of the constituent member of the flat cable and a shape of the seal material is poor in some cases.

### <case (2)>

An electrical apparatus and electronics require a flat cable for appropriately connecting a sensor, an actuator, a power supply and a controller electrically with each other.

There is a known technique in which the flat cable is pulled out directly from an apparatus without using a seal member.

More specifically, there is a known technique in which an apparatus body made of resin material, or a housing case made of resin material is integrally formed together with the flat cable using a resin mold or the like. The housing case is a constituent member which constitutes a portion of the apparatus. According to this technique, the flat cable can be pulled out directly from the apparatus. At the same time, it is possible to prevent water from entering the apparatus.

In this case, however, in order to integrally form the flat cable and the resin material together, the following condition must be satisfied. That is, the endurable temperature of a constituent member of the flat cable must be higher than the forming temperature of the resin material. For the same reason, the endurable pressure of the constituent member of the flat cable must be higher than the forming pressure of the resin material.

Therefore, when a resin material and a forming condition are selected, there are the following constraints. That is, the forming temperature and the forming pressure of the resin material can not be higher than the endurable temperature and the endurable pressure of a constituent member of the flat cable. When a constituent member of the flat cable is selected, a constituent member having the endurable temperature and endurable pressure lower than the forming temperature and the forming pressure of the resin material can not be selected.

Under such constraints, the following problem is generated. For example, there is a case in which it is difficult to select an optimal material. When forming easiness, forming efficiency, quality of a formed product and the like are taken into account, there is a case in which the optimal condition can not be applied. The flexibility of design concerning a shape of the constituent member of the flat cable and a shape of the resin material is poor in some cases.

### <case (3)>

For example, JP-ANos. 2000-58185, 2001-143796 and 2001-148265 disclose techniques concerning a waterproof connector which is dedicated to a flat cable.

If the waterproof connector is used as in these techniques, it is possible to exhibit the electrical connection and the waterproof function. However, the waterproof connector has a drawback that a structure of a waterproof seal itself is complicated. Further, it is necessary that a size and a shape of the flat cable must be the same as those of the waterproof connector. Thus, there is a drawback that a thickness and a width of the flat cable which originally have high design flexibility are limited.

### <Others>

If a structure in which the flat cable is fixed using a resin material or hard rubber material is employed, the following problem is generated. That is, if the flat cable is bent or vibrated, an edge of the resin material or hard rubber material directly abuts against the flat cable. Thus, a bending stress of the flat cable in this abutting portion is increased. Therefore, there is an adverse possibility that the flat cable is folded, cut, peeled off or deviated. Thus, the bending angle or the bending times of the flat cable are limited.

In the case of a normal wiring, if a grommet is used, electrical connection and hermetically sealing function can be realized without any problem. However, if the grommet is used for the flat cable, the following problem is generated. That is, in the case of flat cables, thickness and width thereof are varied with the type thereof. Thus, the grommets sized to fit each flat cable must be used. With this, costs are also increased.

### Disclosure of the Invention

It is an object of the invention to enhance the flexibility of selection of materials for various constituent members. It is another object of the invention to simplify the structure.

To achieve these objects, the invention employs the following means.

That is, in the invention, a liquid rubber material is used as a material of a seal. The rubber material is cured at a normal temperature and under a normal pressure. Therefore, a liquid rubber material is disposed in a desired region, the rubber material is cured at the normal temperature and under the normal pressure to form a seal.

Here, the term "at the normal temperature and under the normal pressure" means at a normal temperature and under a normal pressure. That is, the liquid rubber material can be cured without heating or pressurizing. Of course, the condition may be at an atmospheric temperature and under an atmospheric pressure, or may be different from the atmospheric temperature and the atmospheric pressure.

It is preferable that the rubber material which is cured by being subjected to physical action at the normal temperature and under the normal pressure, is employed. Here, examples of the "physical action" may be actions caused by irradiation of ultraviolet rays (UV), electron beams (EB), radiation (X ray, β ray, γ ray), high frequency and the like. However, if the liquid rubber can be cured, other methods may be employed. For example, moisture curing or NCO curing (e.g., NCO + OH→Urethane) may be employed. One example when the moisture curing is employed is silicone sealant. Also, a material which is cured if it is exposed at a normal temperature and under a normal pressure may be used.

Concerning the case in which the physical action is applied, one method may be used alone or two or more methods may be combined.

As the liquid rubber material, it is possible to use the following rubbers: nitrile rubber (NBR), ethylene propylene rubber (EPDM), acrylic rubber (ACM), silicone rubber (VMQ), fluororubber (FKM), urethane rubber (UR) and butyl rubber (IIR).

A concrete example of the hermetic structure of the invention comprises a flat cable, a member having an insertion hole through which the flat cable is inserted (e.g., seal made of rubber material and resin molded product), and a seal for sealing a gap between the insertion hole and the flat cable. The above-described liquid rubber material is used for the seal in this hermetic structure, and the liquid rubber material is cured at the normal temperature and under the normal pressure to form the seal.

Another concrete example of the hermetic structure of the invention comprises a seal for sealing a predetermined gap, and a flat cable which is integrally formed with the seal. The above-described liquid rubber material is used for the seal in this hermetic structure, and the liquid rubber material is cured at the normal temperature and under the normal pressure to form the seal.

Yet another concrete example of the hermetic structure of the invention comprises a flat cable, a member having an opening through which the flat cable is pulled out (e.g., resin molded product), and a seal charged into the opening. The above-described liquid rubber material is used for the seal in this hermetic structure, and the liquid rubber material is cured at the normal temperature and under the normal pressure to form the seal.

According to the structures of the invention, the seal can be formed without heating or pressurizing. Thus, the conditions of the endurable temperature and endurable pressure are not strict. Therefore, the flexibility of selection of materials for various constituent members, especially constituent members of the flat cable is high. The liquid rubber material is disposed in a desired location, and if the rubber material is subjected to the physical action for example, the seal can be formed. Therefore, it is easy to form the seal and the hermetic structure is simple.

### Brief Description of the Drawings

Fig. 1 is a plan view showing a hermetic structure according to a first embodiment of the invention;
Figs. 2 show an outer appearance of a seal member constituting the hermetic structure of the first embodiment of the invention;
Fig. 3 is a portion of a sectional view of the hermetic structure of the first embodiment of the invention;
Fig. 4 is a plan view of a hermetic structure of a second embodiment of the invention;
Figs. 5 show an outer appearance of a forming die which produces a constituent member of the hermetic structure of the second embodiment of the invention;
Figs. 6 show an outer appearance of a forming die which produces a constituent member of the hermetic structure of the second embodiment of the invention;
Fig. 7 is a partially cut-away sectional view showing a hermetic structure of a third embodiment of the invention; and
Fig. 8 is a schematic sectional view of a waterproof connector showing the hermetic structure of the embodiment of the invention.

### Best Mode for Carrying out the Invention

Preferred embodiments of the invention will be explained below in detail with reference to the drawings. The scope of the invention is not limited to a size, a material, a shape and a relative layout of a constituent member described in the embodiment unless they are specifically described.

### (First Embodiment)

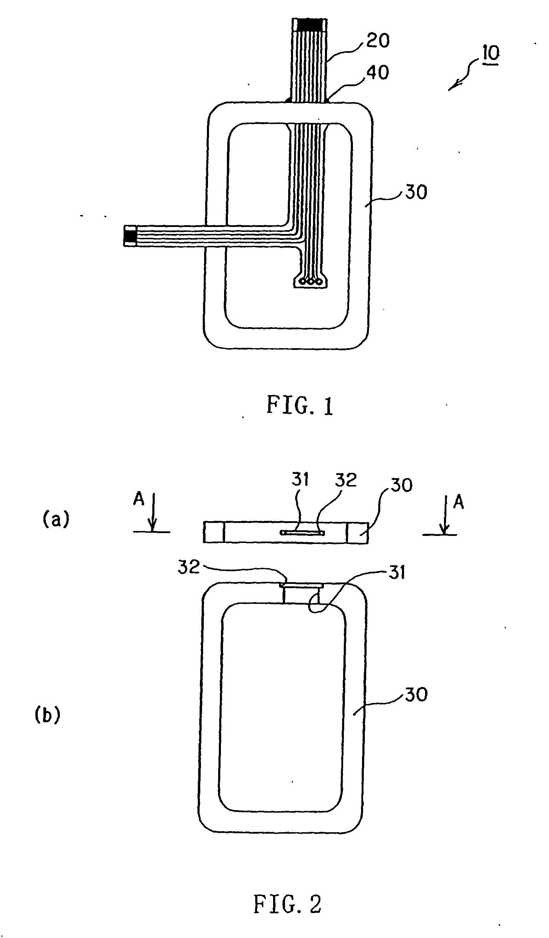

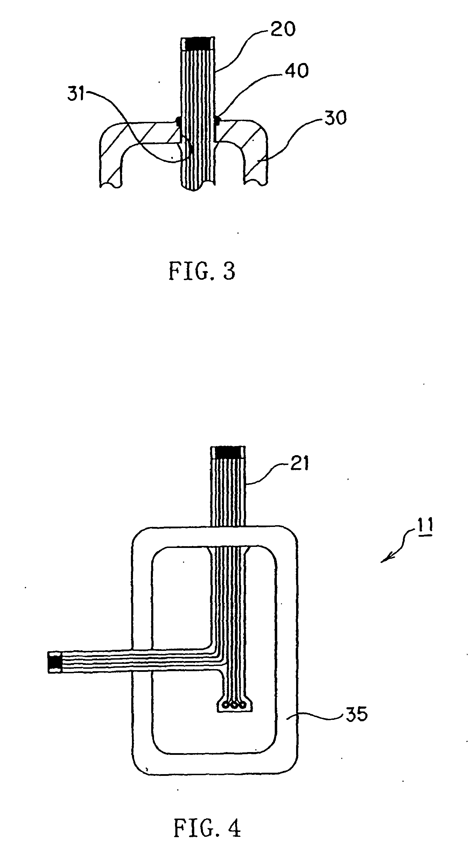

Ahermetic structure according to a first embodiment of the invention will be explained with reference to Figs. 1 to 3. Fig. 1 is a plan view showing the hermetic structure of the first embodiment of the invention. Figs. 2 show an outer appearance of a seal member constituting the hermetic structure of the first embodiment of the invention, wherein Figs. 2(a) is a front view and Fig. 2(b) is a plan view thereof. Fig. 3 is a portion of a sectional view of the hermetic structure of the first embodiment of the invention (a portion of sectional view taken along a line A-A in Fig. 2 in which a flat cable is inserted).

As shown in Fig. 1, a hermetic structure 10 of the embodiment includes a flat cable 20 such as FPC and FFC, and a seal member 30 for sealing a desired gap (not shown).

As shown in Figs. 2, the seal member 30 includes an insertion hole 31 into which the flat cable 20 is inserted, and an introducing groove 32 into which a liquid rubber is introduced.

In this embodiment, the flat cable 20 is first inserted into the insertion hole 31 of the seal member 30. From the introducing groove 32, the liquid rubber is charged into a gap between the flat cable 20 and the insertion hole 31 using a dispenser (not shown) or the like.

Then, the charged liquid rubber is subjected to a physical action at the normal temperature and under the normal pressure, thereby curing the liquid rubber. As a result, a seal 40 for sealing the gap between the flat cable 20 and the insertion hole 31 is formed.

As described above, in this embodiment, the liquid rubber is charged into a location where a user desires to seal and the liquid rubber is subjected to the physical action, the seal 40 canbe formed. Therefore, the forming operation of the seal 40 is easy. The hermetic structure is also extremely simple.

The seal 40 is formed at the normal temperature and under the normal pressure. Thus, heat resistance and pressure resistance of the seal 40 and the flat cable 20 are not required so much. Thus, flexibility of selection of materials for the various members is high.

Thus, materials for the various members can be selected from a wide range while taking the using environment into account for example. To enhance the sealing performance, the materials for the various members can be selected from the wide range while taking the adhesion between the flat cable 20 and the seal 40 and the adhesion between the seal member 30 and the seal 40 into account.

If a flexible material is employed as the seal 40, the flexibility of the seal 40 with respect to the bending of the flat cable 20 can be enhanced. With this, even if the flat cable 20 is bent or vibrated, the flat cable 20 in a boundary surface with respect to the seal 40 can be restrained from being folded, cut, peeled off or deviated. Thus, the reliability and endurance of the flat cable 20 are enhanced. Further, a bending angle of the flat cable 20 can be increased, and the number of bendings of the flat cable 20 can be increased.

A more concrete example based on the above structure will be explained next.

A liquid rubber for forming the seal 40 must be selected while taking the using environment condition into account. The liquid rubber must be selected while taking into account, a material of a mating member (flat cable 20 or the like) to which the seal 40 comes into close contact. This is because that the adhesion is determined depending upon a material of the seal 40 and a material of the mating member.

When the following point is taken into account, a range of viscosity of the liquid rubber is about 1 to 1000 Pa·s, and preferably about 10 to 100 Pa·s. This viscosity range is a range at a temperature during a applying procedure (charging procedure) of the liquid rubber. Here, the point to be taken into account is the adhesion of the seal 40 with respect to the seal member 30 and the flat cable 20 at which the liquid rubber can be cured. Various rubber materials can generally be used as a material for the seal member 30. Thus, this point is also taken into account.

It is preferable that the seal 40 after the liquid rubber is cured satisfies the following condition. That is, a storage elastic modulus of the seal 40 is preferably about 10⁵ to 10⁷ Pa. The hardness (JIS-A) of the seal 40 is preferably 70 or lower. If the storage elastic modulus is above that range, the rubber become excessively cured. Thus, the adhesion, heat shock resistance and impact resistance are lowered. If the storage elastic modulus is below that range, the rubber becomes excessively soft. Thus, the adhesion, heat shock resistance and impact resistance are lowered.

A preferred example of the liquid rubber which satisfies the above conditions is ultraviolet curing type ACM (acrylic rubber). The ACM has characteristics that a viscosity thereof is 25 Pa·s at a room temperature, and a storage elastic modulus after the curing is 1.1 × 10⁶ Pa at 10 Hz and 25°C. The hardness of the ACM (JIS-A) is 50 or lower.

When the ACM is used as the liquid rubber, liquid ACM is charged into a predetermined location. Then, the liquid ACM is irradiated with ultraviolet rays to cure the ACM. The curing condition is that the ACM is irradiated using a super-high pressure mercury lamp of 250W for about 10 seconds. With this, a seal 40 having excellent adhesion can be formed.

### (Second Embodiment)

Figs. 4 to 6 show a second embodiment of the invention. In the first embodiment, liquid rubber which is cured by the physical action is used as a material of the seal which seals the gap between the insertion hole provided in the seal member and the flat cable inserted into the insertion hole. In the second embodiment, a liquid rubber which is cured by the physical action is used as a material of a seal which integrally forms the flat cable.

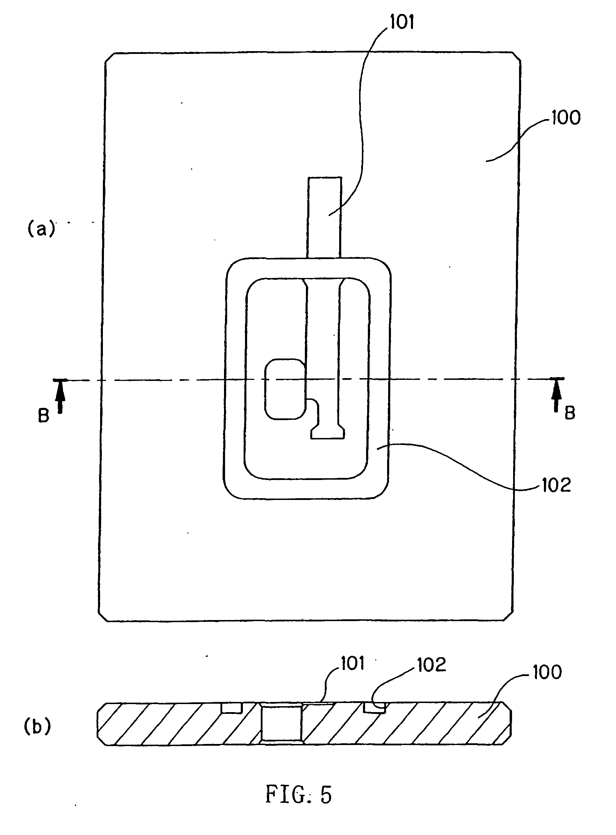

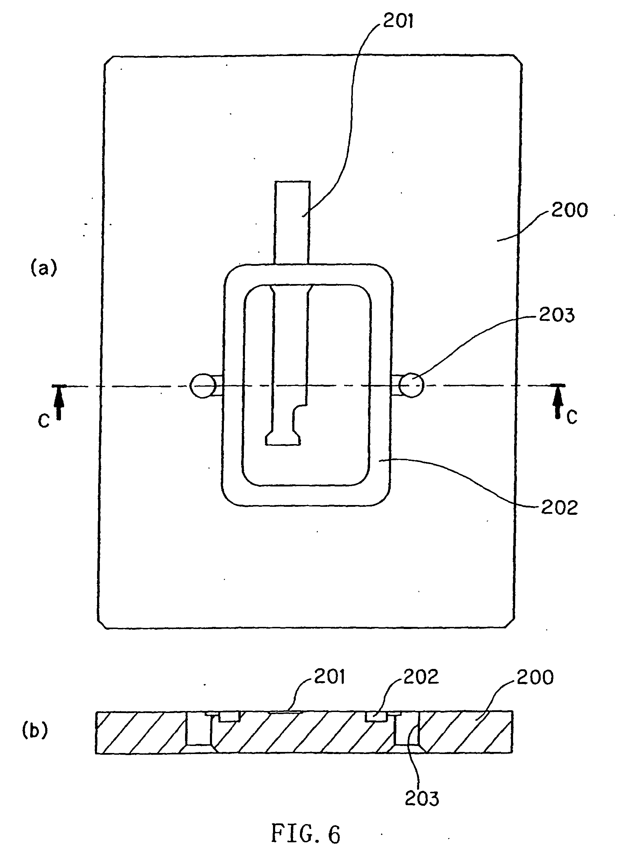

Fig. 4 is a plan view of the hermetic structure of the second embodiment of the invention. Figs. 5 and 6 show an outer appearance of forming dies which produces the constituent member of the hermetic structure of the second embodiment of the invention. Fig. 5(a) is a plan view showing an inner side of one of the forming dies, and Fig. 5(b) is a sectional view taken along a line B-B in Fig. 5(a). Fig. 6(a) is a plan view of an inner side of the other forming die, and Fig. 6(b) is a sectional view taken along a line C-C in Fig. 6(a).

As shown in Fig. 4, a hermetic structure 11 of this embodiment includes a flat cable 21 such as FPC and FFC, and a seal member 35 for sealing a predetermined gap (not shown).

In this embodiment, the flat cable 21 and the seal member 35 are formed as one piece by integral formation.

That is, in this embodiment, the flat cable 21 is set in a flat cable mounting section 101 of a first forming die 100 shown in Fig. 5. Then, a second forming die 200 shown in Fig. 6 is put on and bring into close contact with the first forming die 100. With this operation, the flat cable mounting section 201 in the second forming die 200 is opposed to the flat cable mounting section 101 of the first forming die 100. Thus, the flat cable 21 is accommodated in a cavity portion formed by the flat cable mounting sections.

Next, liquid rubber is poured from a liquid rubber charging hole 203 provided in the second forming die 200. With this, the liquid rubber is charged into a cavity formed by the seal body forming section 102 of the first forming die 100 and the seal body forming section 202 of the second forming die 200.

Then, the charged liquid rubber is subjected to the physical action at the normal temperature and under the normal pressure to cure the liquid rubber. At least one of the first forming die 100 and the second forming die 200 must have a structure in which predetermined physical action can be applied into the cavity. For example, when the liquid rubber is irradiated with ultraviolet rays, electron beams, radiation or high frequency, it is necessary that they can pass through at least a portion of the forming die.

In this manner, the seal member 35 integrally provided with the flat cable 21 is formed. The seal member 35 is used for sealing the predetermined gap (not shown).

In this embodiment, the flat cable 21 and the seal member 35 can be formed integrally at the normal temperature and under the normal pressure. They are integrally formed at the normal temperature and under the normal pressure. Thus, heat resistance and pressure resistance of the seal member 35 and the flat cable 21 are not required so much. Thus, flexibilityof selection of materials for the various members is high.

Therefore, the same effect as that of the first embodiment can be obtained.

If a material having excellent flexibility is employed for the seal member 35, the flexibility of the seal member 35 with respect to the bending of the flat cable 21 can be enhanced. With this, the same effect as that of the first embodiment can be obtained.

It is preferable that the seal member 35 after the liquid rubber is cured satisfies the following condition. That is, it is preferable that the storage elastic modulus of the seal member 35 is about 10⁵ to 10⁷ Pa. It is preferable that the hardness (JIS-A) of the seal member 35 is 70 or lower. If the storage elastic modulus is above that range, the rubber becomes excessively hard. Thus, the adhesion, heat shock resistance and impact resistance are lowered. If the storage elastic modulus is below that range, the rubber becomes excessively soft. Thus, the adhesion, heat shock resistance and impact resistance are lowered.

A preferred example of the liquid rubber which satisfies the above conditions is ultraviolet curing type ACM (acrylic rubber). The ACM has characteristics that a viscosity thereof is 25 Pa·s at a room temperature, and a storage elastic modulus after the curing is 1.1 × 10⁶ Pa at 10 Hz and 25°C. The hardness of the ACM (JIS-A) is 50 or lower.

For example, when ultraviolet curing type liquid rubber is employed as a material for the seal member 35, a transparent resin such as glass, acrylic, vinyl chloride and the like may be employed as materials for the first forming die 100 and the second forming die 200. With these materials, ultraviolet rays pass through the forming die. Thus, the forming die can be irradiated with ultraviolet rays from outside, and the liquid rubber in the cavity can be cured. For example, if ultraviolet curing type ACM is used as the liquid rubber, there is an adverse possibility that the cured ACM is adhered to the forming dies and the liquid rubber can not be separated from the dies. In such a case, if a mold release agent is applied to the forming dies, the liquid rubber can easily be separated from the dies.

In this manner, the seal member 35 integrally provided with the flat cable 21 can be formed. Since the flexibility of material selection of the various constituent members is high, it is possible to enhance the adhesion between the flat cable 21 and the seal member 35 and adaptability with respect to the using environment. Thus, a hermetic structure having excellent reliability can be realized.

### (Third Embodiment)

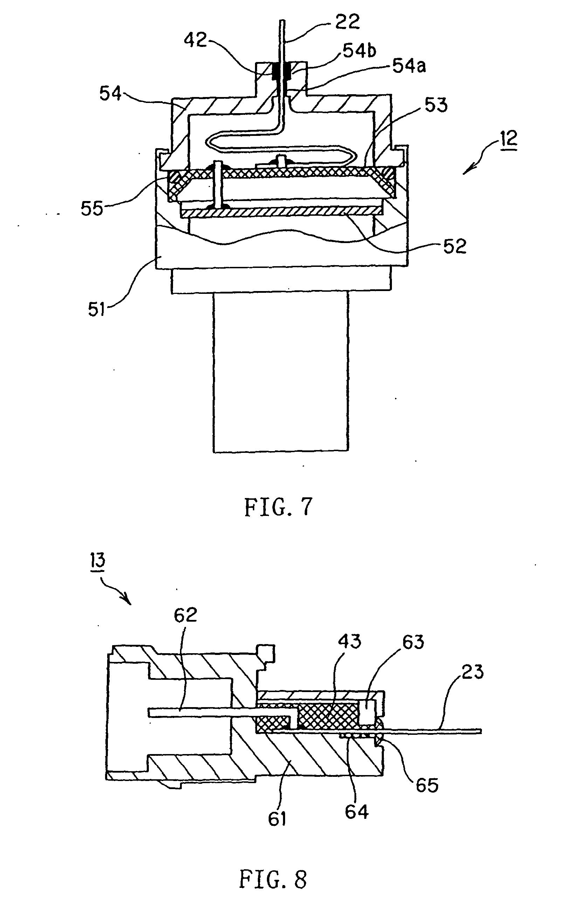

Fig. 7 shows a third embodiment of the invention. In the previous embodiments, the hermetic structures where the flat cable is pulled out from the rubber seal have been explained. In the third embodiment, a hermetic structure where the flat cable is pulled out directly from a housing case or the like of the apparatus body is explained.

In this embodiment, a pressure sensor as the apparatus is explained. Fig. 7 is a partially cut-away sectional view of the hermetic structure of the third embodiment of the invention. In Fig. 7, a portion of the pressure sensor is cut away so that the hermetic structure can be easily seen.

The pressure sensor 12 includes a circuit substrate 52 and a plate 53 in a body 51. One end of the flat cable 22 is fixed to the plate 53 by soldering. The circuit substrate 52 and the flat cable 22 are electrically connected to each other through wiring or the like.

A cap 54 is mounted on an upper portion of the body 51. The flat cable 22 is inserted into an insertion hole 54a provided in the cap 54. The other end of the flat cable 22 is pulled out from the pressure sensor 12 main body.

Here, it is necessary that liquid does not enter the pressure sensor 12 main body. Thereupon, an O-ring 55 is provided around a fitting portion (caulking portion) between the body 51 and the cap 54 to seal this portion.

In the meanwhile, it is also necessary to seal a gap between the flat cable 22 and the insertion hole 54a provided in the cap 54. A seal 42 is also provided in the gap.

In this embodiment, a liquid rubber which is cured by the physical action at the normal temperature and under the normal pressure is used as a material of the seal 42.

That is, in the case of this embodiment also, the liquid rubber is used in the gap to be sealed as in the first embodiment.

In this embodiment, the flat cable 22 is first inserted into the insertion hole 54a of the cap 54. In this state, liquid rubber is charged into the gap between the insertion hole 54a and the flat cable 22 from the introducing opening 54b using a dispenser (not shown) or the like.

Then, the charged liquid rubber is subjected to the physical action at the normal temperature and under the normal pressure, thereby curing the liquid rubber. With this, the seal 42 for sealing the gap between the flat cable 22 and the insertion hole 54a is formed.

As described above, in this embodiment, like the first embodiment, it is easy to form the seal and the hermetic structure is extremely simple. The flexibility of selection of materials for various members is high, and the same effect as that of the first embodiment can be obtained.

Like the first embodiment, since the seal 42 having the excellent flexibility is used, the reliability and endurance of the flat cable 22 are enhanced. The concrete example of selection of the seal 42 is the same as that of the first embodiment.

In this embodiment, a predetermined gap can be sealed by charging the liquid rubber. Therefore, the gap can easily be sealed irrespective of a shape of the flat cable 22. Thus, as compared with a case in which a grommet is employed, it is easy to fit the shape of the flat cable 22.

### (Fourth Embodiment)

Fig. 8 shows a fourth embodiment of the invention. In the first and second embodiments, the hermitic structures where the flat cable is pulled out from the rubber seal have been explained. In the fourth embodiment, a hermetic structure in a waterproof connector will be explained.

Fig. 8 is a schematic sectional view of the waterproof connector showing the hermetic structure of the fourth embodiment of the invention.

The waterproof connector 13 of this embodiment includes a connector housing 61 which is integrally formed on a connector pin 62, a flat cable 23 which is electrically connected to the connector pin 62 through soldering or the like, and a seal 43 which prevents water or the like from entering.

The connector housing 61 includes a partition wall 63 for forming a region into which liquid rubber is charged, an opening 64 through which the flat cable 23 is pulled out, and an introducing opening 65 through which the liquid rubber is charged.

In this embodiment, the flat cable 23 is inserted from the opening 64 of the connector housing 61. An end of the flat cable 23 is provided with a land (not shown). This land and the connector pin 62 are brought into contact with each other and in this state, they are fixed to each other through soldering or the like.

Next, liquid rubber is charged into a region which is isolated by the partition wall 63 using a dispenser (not shown) or the like from the introducing opening 65. With this, the opening 64 through which the flat cable 23 is pulled out is filled with the liquid rubber.

Then, the charged liquid rubber is subjected to the physical action at the normal temperature and under the normal pressure, thereby curing the liquid rubber. With this, the seal 43 for sealing the gap between the flat cable 23 and an inner wall surface of the connector housing 61 is formed.

In this manner, the liquid rubber is charged into the opening 64 through which the flat cable 23 is pulled out and the liquid rubber is subjected to the physical action, thereby forming the seal 43. Thus, it is easy to form the seal 43, and the hermetic structure is also simple. Thus, complicated hermetic structure is not required unlike the conventional waterproof connector.

When the hermetic structure of this embodiment is employed, as compared with the conventional technique, the necessity for adapting the shape of the flat cable in accordance with a structure of the waterproof connector is low.

If a material having excellent flexibility is employed for the seal 43, the flexibility of the seal 43 with respect to the bending of the flat cable 23 is enhanced. Therefore, the same effect as that of the first embodiment can be obtained.

### Industrial Applicability

As explained above, according to the hermetic structure of the invention, the flexibility of selection of materials for various constituent members is enhanced. Further, the structure is simplified.

## Claims

1. A hermetic structure comprising a flat cable,
a member having an insertion hole through which the flat cable is inserted, and
a seal for sealing a gap between the insertion hole and the flat cable, wherein
the seal is made of liquid rubber material which is cured and formed at the normal temperature and under the normal pressure.

2. A hermetic structure comprising a seal for sealing a predetermined gap, and
a flat cable which is integrally formed with the seal, wherein
the seal is made of liquid rubber material which is cured and formed at the normal temperature and under the normal pressure.

3. A hermetic structure comprising a flat cable,
a member having an opening through which the flat cable is pulled out, and
a seal charged into the opening, wherein
the seal is made of liquid rubber material which is cured and formed at the normal temperature and under the normal pressure.

4. A hermetic structure according to any one of claims 1 to 3, wherein the liquid rubber material is cured and formed if the liquid rubber material is subjected to a physical action at the normal temperature and under the normal pressure.

5. A hermetic structure according to claim 4, wherein at least one of effects caused by irradiation of ultraviolet rays, electron beams, radiation and high frequency is included in the physical action.
